# EUROPÄISCHE PATENTANMELDUNG

(11) **EP 0 827 260 A2**
(43) Veröffentlichungstag der Anmeldung: **04.03.1998**
(21) Anmeldenummer: 97113240.2
(22) Anmeldetag: 31.07.1997
(51) Int. Cl.: H02K 11/00, H02K 23/66

(54) **Elektromotor mit angebrachtem Winkelschnittgeber**

(30) Priorität: 26.08.1996 DE 19634502
(71) Anmelder: INTERELECTRIC AG, CH-6072 Sachseln (CH)
(72) Erfinder: Grosskopf, Reimar, 6010 Kriens (CH)
(74) Vertreter: Grünecker, Kinkeldey, Stockmair & Schwanhäusser Anwaltssozietät

(57) **Zusammenfassung**

Die Erfindung bezieht sich auf einen Elektromotor mit angebrachtem Zusatzelement, insbesondere Winkelschrittgeber, und einer Montagegrundplatte, auf der das Zusatzelement aufsitzt und die mit dem Elektromotor in ihrer Winkellage bei der Montage einjustierbar verbunden ist. Die Einstellbarkeit der Winkellage soll verbessert werden, so daß sich die Montage vereinfacht. Hierzu wird am Elektromotor eine Profilverzahnung und an der Montagegrundplatte eine Gegenprofilverzahnung vorgesehen, die im wesentlichen paßgenau ineinandergreifen und ein Anbringen der Grundplatte in verschiedenen Winkellagen in von der Zahnteilung vorgegebenen Winkelschritten ermöglicht.

## Beschreibung

Die Erfindung bezieht sich auf Elektromotoren mit angebrachtem Zusatzelement, insbesondere Winkelschrittgeber, und einer Montagegrundplatte, auf der das Zusatzelement aufsitzt und die mit dem Elektromotor in ihrer Winkellage bei der Montage einjustierbar verbunden ist.

Bei kleinen Gleichstrommotoren ist es bekannt, an der Stirnseite des zylindrischen Motorgehäuses einen Winkelschrittgeber anzuordnen. Hierzu wird an der Stirnseite des Elektromotors eine Zwischenplatte eingerastet, auf der eine Montagegrundplatte befestigbar ist. Die Zwischenplatte und die Montagegrundplatte weisen jeweils eine Öffnung zum Durchführen eines Wellenendes des Elektromotors auf, wobei an der Montagegrundplatte kreisbogenförmige Langlöcher um den Mittelpunkt dieser Öffnung angeordnet sind. Hierdurch läßt sich die Montagegrundplatte mittels Schrauben an der Zwischenplatte befestigen. Durch die Langlöcher ist eine Einstellung der Winkellage der Montagegrundplatte in begrenztem Umfang gegeben. Die Montagegrundplatte ist weiter so ausgebildet, daß sie die Rückwand des Winkelschrittgebers bildet. Dieser wird mittels Rasteinrichtungen an der Montagegrundplatte befestigt. Das in den Winkelschrittgeber durch die Zwischen- und Montagegrundplatte hineinragende Wellenende des Elektromotors wird entsprechend mit Einrichtung des Winkelschrittgebers verbunden. Insbesondere bei der Anordnung mehrerer Elektromotoren nebeneinander oder in Sternformation oder eventuell in anderen Anordnungen ist die Einstellbarkeit der Montageposition des Winkelschrittgebers von großem Vorteil, so daß diese sich nicht gegenseitig in ihrer Anordnung behindern. Nachteilig bei der bekannten Anbringung ist, daß ein genaues Ausrichten des Winkelschrittgebers ohne zusätzliche Hilfsmittel nicht durchführbar ist. Darüber hinaus müssen die Schrauben erst mühsam angezogen werden, bevor der Winkelschrittgeber aufgesetzt werden kann.

Die Aufgabe der vorliegenden Erfindung besteht darin, einen eingangs genannten Elektromotor derart zu verbessern, daß eine einfache positionsgenaue Montage des Winkelschrittgebers in unterschiedlichen Anordnungsvarianten bezüglich seiner Winkellage möglich ist.

Diese Aufgabe wird erfindungsgemäß dadurch gelöst, daß am Motorgehäuse eine Profilverzahnung und an der Montagegrundlage eine Gegenprofilverzahnung vorgesehen sind, die im wesentlichen paßgenau ineinandergreifen und ein Anbringen der Grundplatte in verschiedenen Winkellagen in von der Zahnteilung vorgegebenen Winkelschritten ermöglicht.

Durch die vorliegende Erfindung entfällt ein mühsames Ausrichten der Montagegrundplatte relativ zum Elektromotor, da diese zielgenau an der Profilverzahnung angeordnet werden kann. Bei der Wahl einer kleinen Zahnteilung lassen sich durch diese Ausführungsform eine große Anzahl von Anordnungsmöglichkeiten schaffen, so daß sich durch die schrittweise Verstellbarkeit der Winkellage keine Nachteile ergeben. Eine Fixierung gegenüber Verdrehen der Montagegrundplatte bezüglich der Verzahnung muß ebenfalls nicht vorgenommen werden.

Aus diesem Grunde können z.B. bei einer weiteren Ausführungsform die Grundplatte und der Elektromotor über Rasteinrichtungen miteinander verbunden sein. Die Rasteinrichtungen sollen so ausgestaltet sein, daß sie die entsprechende Rastverbindung in sämtlichen einstellbaren Winkellagen bereitstellen.

Der Grundkörper des Elektromotors kann nach Art eines Baukastensystems auch für andere Anwendungsgebiete verwendet werden. Es besteht vorteilhaft die Möglichkeit die Profilverzahnung des Motorgehäuses an einer Zwischenplatte anzuordnen, die mit dem Motorgehäuse verbunden und diesem zugeordnet ist.

Günstigerweise können an der Zwischenplatte Rastelemente angebracht sein, die in entsprechende Rastöffnungen am Elektromotor rastend eingesteckt sind. Diese schnelle Befestigungsmöglichkeit vereinfacht die Montage und gewährleistet eine positionsgenaue Anbringung der Zwischenplatte.

Von Vorteil ist es bei einer weiteren Ausführungsform, daß die Profilverzahnung und/oder Gegenprofilverzahnung quer zur Fügerichtung der Verzahnungen gegenüber der jeweils anderen Verzahnung zurückfedernd angeordnet ist. Hierdurch läßt sich eine Art Ratscheneffekt erzielen, so daß die Montagegrundplatte selbst bei bereits miteinander gesteckten Verzahnungen noch in ihre Winkellage verdreht werden kann. Die Ausgestaltung einer solchen Federung bestimmt dann auch die für diesen Vorgang aufzuwendende Kraft.

Bei einer Ausführungsform wird vorgeschlagen, an der Zwischenplatte einen Vorsprung mit einer Außenverzahnung als Profilverzahnung und an der Montagegrundplatte eine Aufnahmeöffnung mit entsprechender Innenverzahnung als Gegenprofilverzahnung vorzusehen. Günstigerweise kann die Außenverzahnung und/oder Innenverzahnung jeweils nur bereichsweise bzw. segmentweise umlaufend an entsprechendem Vorsprung und/oder der Aufnahmeöffnung angeordnet sein. Zum Bereitstellen von Anordnungsmöglichkeiten in einem Winkelbereich von 360° ist es nicht unbedingt erforderlich, daß die Verzahnung umlaufend und durchgängig ausgebildet ist. Vielmehr reicht es vollkommen aus, wenn sich immer bestimmte Abschnitte der Verzahnung in allen Winkellagen überdecken.

Um die Verbindung von Montagegrundplatte und Zwischenplatte zu vereinfachen, kann es vorgesehen sein, daß als Rasteinrichtung zum Verbinden der Grundplatte am Elektromotor radial über das Zahnprofil der Außenverzahnung überstehende Rastnasen am Vorsprung angeordnet sind, die an entsprechenden Bereichen an der Grundplatte einrasten. Es besteht auch die Möglichkeit mehrere dieser Hinterschneidungsbereiche vorzusehen. Die Gegenprofilverzahnung selbst kann hierbei die entsprechende Hinterschneidung bilden. Beim Fügen der Verzahnungen kommt es somit automatisch zu einer kompletten Verbindung von Zwischenplatte und Montagegrundplatte.

Des weiteren kann in der Montagegrundplatte ein von einer Außenkante bis zur Aufnahmeöffnung verlaufender Trennschlitz vorgesehen sein, der die Montagegrundplatte derart unterteilt, daß zumindest ein Bereich der Aufnahmeöffnung von zwei auf ihrer Innenseite jeweils mit zumindestens einem Bereich der Innenverzahnung versehenen Federarmen umgrenzt ist. Hierdurch läßt sich die Montagegrundplatte ohne weiteres auf die Zwischenplatte aufstecken, da die Federarme beim Fügevorgang von den Rastnasen nach außen gedrückt werden und anschließend hinter diesen wieder verrastend zurückfedern. Durch geringfügiges Aufweiten des Trennschlitzes läßt sich auch ein nachträgliches Einstellen der Winkellage der Montagegrundplatte sehr einfach vornehmen.

Zur Verstärkung des Federeffektes kann in dem dem Trennschlitz gegenüberliegenden Seitenbereich der Aufnahmeöffnung mindestens ein einen Federarm zugeordneter Federschlitz angeordnet sein, der im Abstand zur Außenkante der Montagegrundplatte endet, so daß der Federarm über einen Steg mit dem Rest der Montagegrundplatte verbunden ist. Hierdurch wird in mindestens einem Federarm die jeweils gewünschte Federsteifigkeit zu eigen, wodurch bei günstiger Ausführung ein leichtes Verbinden von Zwischenplatte und Montagegrundplatte erfolgt, jedoch eine ausreichende Umschließung der Verzahnungen gegeben und ein einfaches Verändern der Winkellage nicht mehr möglich ist.

Bevorzugt kann jeder der Federarme eine Positioniereinrichtung aufweisen, die mit einer entsprechenden Positioniereinrichtung des Zusatzelementes im Eingriff steht und ein Bewegen der Federarme verhindert. Sobald das Zusatzelement auf die Montagegrundplatte aufgesetzt wird, sind somit die Federarme arretiert und können sich nicht mehr federnd bewegen, wodurch auch der Verzahnungseingriff zwischen Zwischenplatte und Montagegrundplatte gesichert ist.

Bei einer Ausführungsform kann die Positioniereinrichtung an der Montagegrundplatte als ein durch den Trennschlitz geteilten Positionierstift ausgebildet sein, der in einer als Positionieröffnung ausgebildeten Positioniereinrichtung in dem Zusatzelement eingreift. Diese Ausgestaltung hat Vorteile bei der Fertigung bzw. Ausgestaltung einer Form, wenn die Montagegrundplatte aus Kunststoff mittels Spritzgußtechnik hergestellt wird.

Bevorzugt kann die Montagegrundplatte und/oder das Zusatzelement Rasteinrichtungen zum Miteinanderverrasten aufweisen. Entsprechend einer Ausführungsform kann somit der Anbau des Zusatzelementes an den Grundkörper des Elektromotors vollständig durch einfachste Montageschritte, insbesondere ohne mühsames Verschrauben, erfolgen. Sämtliche Teile werden in sehr kurzer Zeit positionsgenau aufgesteckt.

Günstigerweise können die Profilverzahnung und Gegenprofilverzahnung auf einer Zylindermantelfläche angeordnet sein.

Des weiteren wird Schutz begehrt für eine Montagevorrichtung für einen Elektromotor nach einem der Ansprüche 1 bis 14 zum Anbringen eines Zusatzelementes. Die Montagevorrichtung ist gekennzeichnet durch eine Montagegrundplatte mit einer Gegenprofilverzahnung.

Mit Hilfe einer solchen Montagevorrichtung lassen sich die unterschiedlichsten Zusatzelemente an einem Elektromotor anbringen. Als Beispiel sei lediglich ein Winkelschrittgeber und Positionsgeber genannt.

Günstigerweise kann die Montagevorrichtung zumindest zweiteilig ausgebildet sein, indem sie zusätzlich noch eine an dem Elektromotor anbringbare Zwischenplatte mit einer zur Gegenprofilverzahnung der Montagegrundplatte passenden Profilverzahnung umfaßt.

Im folgenden wird ein Ausführungsbeispiel der vorliegenden Erfindung anhand einer Zeichnung näher erläutert. Es zeigt:
- Fig. 1: eine Vorderansicht eines an einem Elektromotorgehäuse angebrachten Winkelschrittgebers,
- Fig. 2: den an dem Elektromotorgehäuse angebrachten Winkelschrittgeber aus Fig. 1 in einer Seitenansicht und in einer um 45° nach rechts gedrehten Stellung,
- Fig. 3: eine Montagegrundplatte in einer Vorderansicht,
- Fig. 4: die Montagegrundplatte aus Fig. 3 in einer geschnittenen Seitenansicht,
- Fig. 5: die Montagegrundplatte aus Fig. 3 in einer Rückansicht,
- Fig. 6: eine Zwischenplatte in verkleinerter Vorderansicht,
- Fig. 7: die Zwischenplatte aus Fig. 6 entlang der Linie VII-VII geschnitten,
- Fig. 8: die Zwischenplatte aus Fig. 6 entlang der Linie VIII-VIII geschnitten,
- Fig. 9: die Zwischenplatte aus Fig. 6 in einer Rückansicht,
- Fig. 10: eine schematische Anordnungsvariante von Winkelschrittgebern und
- Fig. 11: eine zweite Anordnungsvariante von Winkelschrittgebern in schematischer Darstellung.

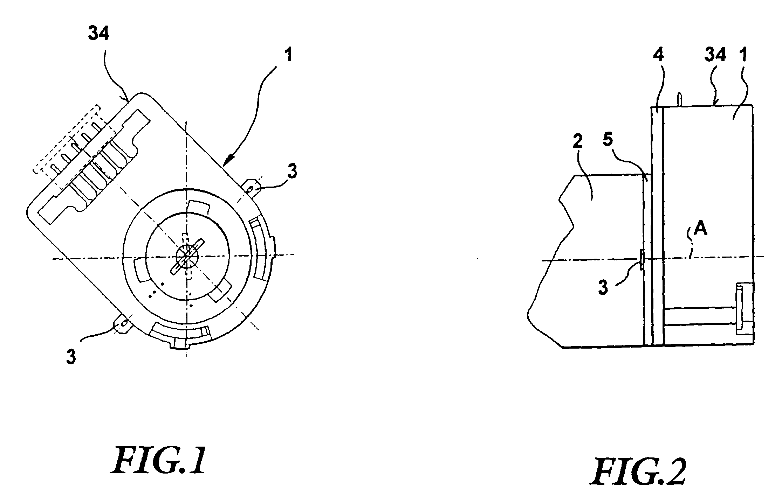

Anhand der Figuren 1 und 2 ist zu erkennen, wie ein Winkelschrittgeber 1 an einem Elektromotorgehäuse 2 angebracht ist. Der Aufbau des Winkelschrittgebers 1 ist an sich bekannt, weshalb auf eine Beschreibung des näheren Aufbaus nicht eingegangen wird. Der Winkelschrittgeber 1 kann um die Achse A in den unterschiedlichsten Winkellagen angeordnet werden. In der Fig. 1 ist eine geneigte Anordnung und in Fig. 2 eine um 45° zur Fig. 1 aufrechte Anordnung dargestellt. Seitlich hervorstehend am Motorgehäuse 2 sind die Kontaktanschlüsse 3 dargestellt, die zur Stromversorgung des Elektromotors dienen.

Der Winkelschrittgeber 1 ist unter Zwischenschaltung einer Montagegrundplatte 4 und einer Zwischenplatte 5 mit dem Motorgehäuse 2 verbunden.

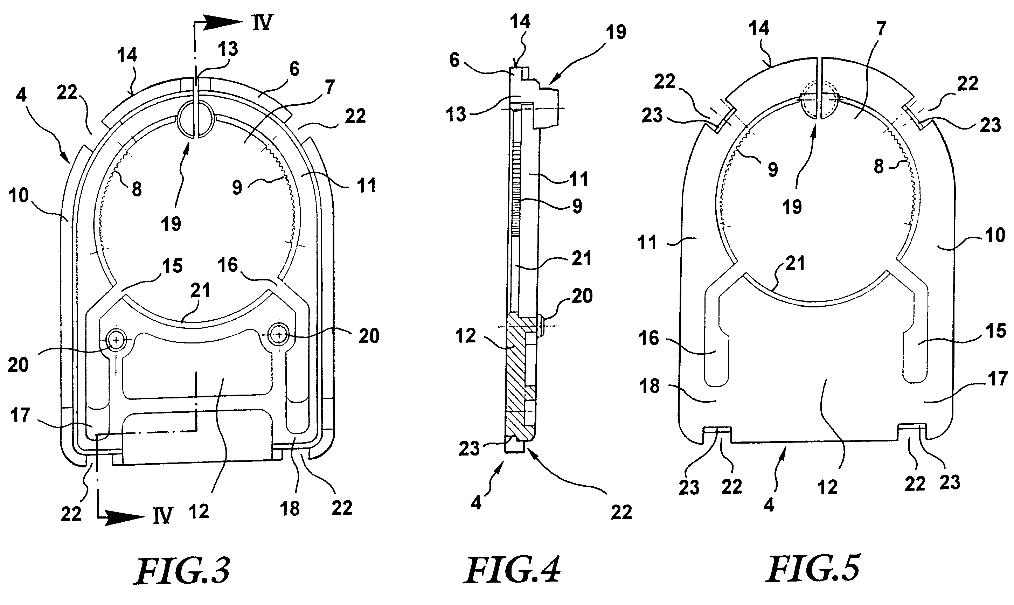

Wie anhand der Figuren 3, 4 und 5 zu erkennen ist, ist die Montagegrundplatte 4 an die Form des Winkelschrittgebers 1 angepaßt und weist somit ein rechtwinkliges und ein kreisförmiges Ende auf. Die Montagegrundplatte 4 dient gleichzeitig als Rückwand des Winkelschrittgebers und weist einen nahezu umlaufenden Flansch 6 auf, der bündig mit dem Gehäuse des Winkelschrittgebers 1 abschließt. Die Montagegrundplatte umfaßt eine Aufnahmeöffnung 7, die auf gegenüberliegenden Seitenbereichen jeweils einen Innenverzahnungsbereich 8 und 9 aufweist. Die einzelnen Zähne weisen im Querschnitt eine Dreiecksform und eine relativ geringe Höhe, z.B. 0,3 mm, auf. Im wesentlichen ist die Montagegrundplatte 4 in drei Bereiche aufgeteilt. Diese umfassen einen linken Federarm 10, einen rechten Federarm 11 und einen Basisbereich 12. Der Federarm 10 und 11 und der Basisbereich 12 sind so zueinander angeordnet, daß sie gemeinsam die zylindrische Aufnahmeöffnung 7 umgrenzen, wobei der Verzahnungsbereich 8 auf dem Federarm 10 und der Verzahnungsbereich 9 auf dem Federarm 11 angeordnet ist. Der Basisbereich 12 ist im Bereich der Aufnahmeöffnung 7 ohne Verzahnung. Die beiden Federarme 10 und 11 sind an dem dem Basisbereich 12 abgewandten Ende der Montagegrundplatte 4 durch einen Trennschlitz 13 voneinander getrennt. Dieser Trennschlitz 13 erstreckt sich von der Außenkante 14 der Montagegrundplatte 4 bis zur Aufnahmeöffnung 7.

Darüber hinaus ist jeder Federarm 10 und 11 im Bereich der Aufnahmeöffnung 7 durch jeweils einen Federschlitz 15, 16 vom Basisbereich 12 getrennt und lediglich entsprechend über einen Verbindungssteg 17 und 18 mit diesem verbunden. Die Federschlitze 15 und 16 verlaufen zuerst radial zur Aufnahmeöffnung 7 und sind dann derart abgewinkelt, daß sie parallel zur Außenkante 14 der Montagegrundplatte 4 ausgerichtet sind.

Im Bereich des Trennschlitzes 13 ist ein zur Innenseite des Winkelschrittgebers 1 vorstehender Positionierstift 19 angeordnet, der durch den Trennschlitz 13 in zwei Hälften geteilt ist, so daß jeweils eine Hälfte jeweils an einem der Federarme 10 und 11 sich befindet. Der Winkelschrittgeber 1 weist eine nicht dargestellte Aufnahmeöffnung für den Positionierstift 19 auf. Zwei weitere, nicht geteilte Positionierbolzen 20 sind auf dem Basisbereich 12 angeordnet und greifen ebenfalls in nicht dargestellte Öffnungen im Winkelschrittgeber 1 ein.

Des weiteren sind am Umfang der Montagegrundplatte 4 Arretieraussparungen 22 derart vorgesehen, daß an dieser Stelle der Flansch 6 unterbrochen ist. Wie insbesondere anhand der Fig. 4 zu erkennen ist, weisen die Arretieraussparungen 22 eine Hinterschneidung 23 auf, so daß entsprechende Rastelemente am Winkelschrittgeber 1 (nicht dargestellt) in die Arretieraussparungen 22 einrasten können und somit den Winkelschrittgeber 1 an der Montagegrundplatte 4 halten.

Aus der Fig. 4 ist ebenfalls zu erkennen, daß die Verzahnungsbereiche 8 und 9 auf einem im Vergleich zur Restdicke der Montagegrundplatte 4 relativ dünnen Steg 21 angebracht sind. Hierdurch fällt die Länge der Verzahnungsbereiche 8 und 9 ebenfalls relativ gering aus.

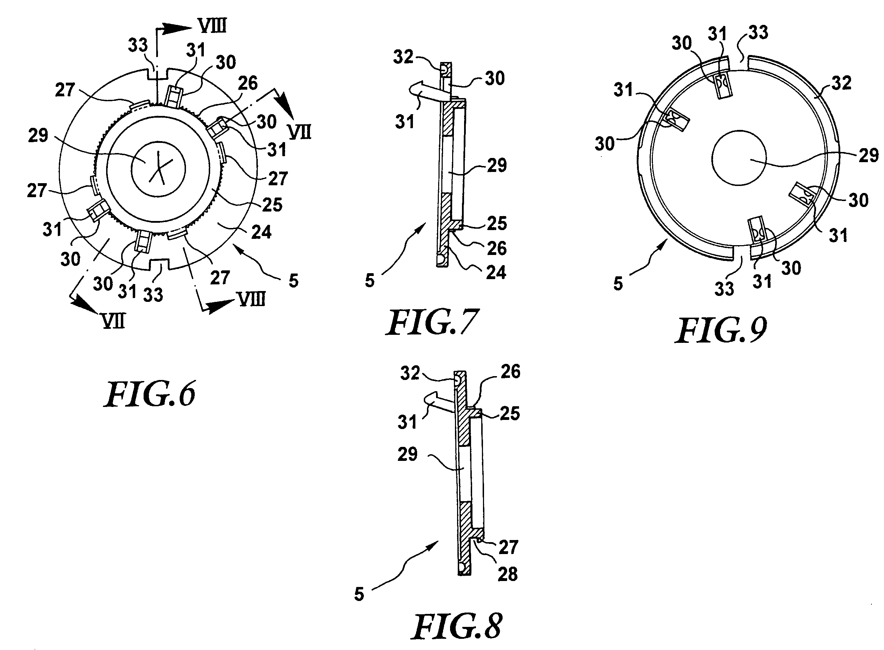

Anhand der Figuren 6 bis 9 wird nun auf die zwischen Motorgehäuse 2 und Montagegrundplatte 4 anzuordnende Zwischenplatte 5 Bezug genommen. Die Zwischenplatte 5 besteht aus einer Kreisscheibe 24, auf deren der Montagegrundplatte 4 zugewandten Seite ein zylindrischer Vorsprung 25 vorgesehen ist. Am Außenumfang des Vorsprungs 25 ist im wesentlichen umlaufend eine Außenverzahnung 26 vorgesehen. Diese erstreckt sich von der Kreisscheibe 24 bis etwa zur Mitte des Vorsprungs 25. Die Außenverzahnung 26 wird lediglich an einigen Stellen von anderen, im nachfolgenden noch näher beschriebenen Bauteilen unterbrochen und ist von ihrer Form und Größe derart ausgestaltet, daß sie paßgenau in die Verzahnungsbereiche 8 und 9 der Montagegrundplatte 4 einsteckbar ist.

Im wesentlichen gleichmäßig am Außenumfang des Vorsprungs 25 verteilt sind vier Rastnasen 27 angebracht, die radial über die Außenverzahnung 26 hervorstehen und eine Hinterschneidung 28 aufweisen, die eine an den Steg 21 an der Montagegrundplatte 4 (Fig. 4) angepaßte Breite aufweist.

Die Zwischenplatte weist eine Bohrung 29 auf, durch die die nicht dargestellte Motorwelle hindurchgesteckt werden kann.

Des weiteren sind in der Kreisscheibe 24 vier Aussparungen 30 radial auswärts vom Vorsprung 25 sich erstreckend angeordnet, wobei im Bereich dieser Aussparungen 30 sich schräg nach hinten wegerstreckende Rasthaken 31 befinden. Die Rasthaken 31 befinden sich auf der dem Vorsprung 25 abgewandten Seite der Zwischenplatte 5 und sind zum Eingreifen in entsprechende Aufnahmen an der Stirnseite des Motorgehäuses 2 vorgesehen. Darüber hinaus befindet sich auf der dem Vorsprung 25 abgewandten Seite der Kreisscheibe 24 eine umlaufende Ringnut 32, die zur Aufnahme eines nicht dargestellten O-Rings dienen kann.

Am Außenumfang der Kreisscheibe 24 sind weiter Ausnehmungen 33 vorgesehen, die im Bereich der Kontaktanschlüsse 3 des Motors angeordnet sind.

Im folgenden wird die Wirkungs- und Funktionsweise des oben beschriebenen Ausführungsbeispiels näher erläutert.

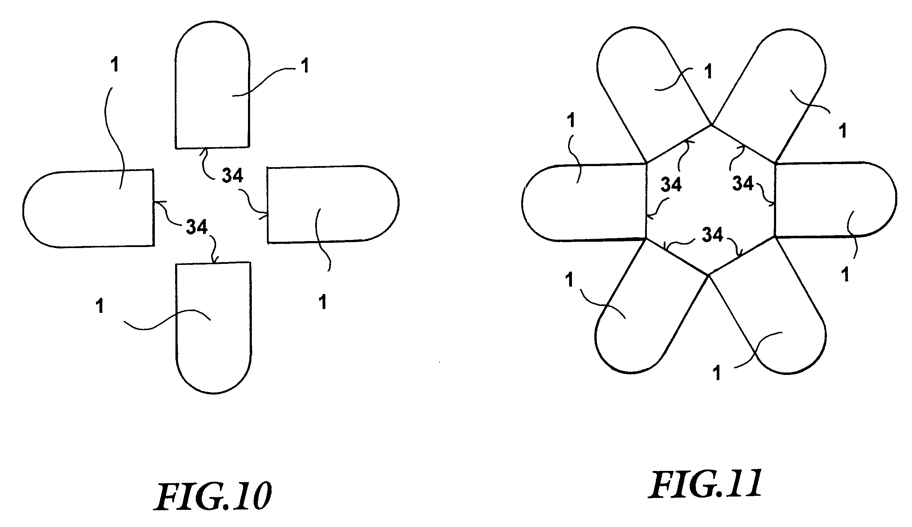

In den Figuren 10 und 11 sind jeweils schematisch Anordnungsvarianten für mehrere Elektromotoren mit Winkelschrittgebern 1 dargestellt. Bei den in den Figuren 10 und 11 gezeigten Varianten ist es bevorzugt, daß die Anschlußseiten 34 der Winkelschrittgeber 1 aufeinander zuweisen, so daß die nicht dargestellten Anschlußkabel gemeinsam abgeführt werden können. Es besteht aber auch die Möglichkeit, die Motorgehäuse 2 so nahe wie möglich aneinander anzuordnen und die Winkelschrittgeber 1 mit ihrer Anschlußseite 34 nach außen weisen zu lassen. Neben denen in den Figuren 10 und 11 gezeigten Varianten gibt es viele andere Anordnungsmöglichkeiten und Gruppierungen derartiger Elektromotoren, so daß bei vorgegebener Einbaulage des Motorgehäuses 2 eine Einstellbarkeit der Winkellage des Winkelschrittgebers 1 gewünscht ist.

Zur Montage des Winkelschrittgebers 1 am Motorgehäuse 2 wird bevorzugt zuerst die Zwischenplatte 5 mit der Stirnseite des Motorgehäuses 2 verbunden. Hierzu werden die Rasthaken 31 in entsprechende Aufnahmen am Motorgehäuse 2 eingesteckt und verrastet. Gleichzeitig erfolgt durch die Verrastung eine Zentrierung der Zwischenscheibe 5. Die nicht dargestellte Motorwelle des Motorgehäuses 2 erstreckt sich dann durch die Bohrung 29 der Zwischenplatte 5. Anschließend wird die Montagegrundplatte 4 auf die Zwischenplatte 5 aufgesteckt. Dabei weist die in Fig. 5 gezeigte Seite der Montagegrundplatte 4 zur Zwischenplatte 5. Die Winkellage der Montagegrundplatte 4 wird gewählt und die Aufnahmeöffnung 7 über dem Vorsprung 25 aufgeschoben. Dadurch, daß die Rastnasen 27 mit dem Steg 21 in Berührung kommen, und ein Druck auf die Montagegrundplatte 4 ausgeübt wird, werden die Federarme 10 und 11 nach außen gedrückt. Dabei bewegen sich die Federarme 10 und 11 im wesentlichen um die Verbindungsstege 17 und 18 als Drehpunkte. Der Trennschlitz 13 verbreitert sich bei diesem Vorgang. Sobald der Steg 21 über die Rastnasen 27 geschoben worden ist, rastet dieser in die Hinterschneidung 28 ein, indem die Federarme 10 und 11 wieder zurückfedern. Gleichzeitig greifen die Verzahnungsbereiche 8 und 9 in die Außenverzahnung 26 ein.

Falls nunmehr noch Korrekturen der Winkellage vorgenommen werden müssen, läßt sich die Montagegrundplatte 4 aufgrund der Federwirkung der Federarme 10 und 11 durchaus nach Art einer Ratsche um die Achse der Aufnahmeöffnung 7 verdrehen.

Abschließend wird der Winkelschrittgeber 1 auf die Montagegrundplatte 4 aufgesteckt. Hierzu weist der Winkelschrittgeber 1 nicht dargestellte Rasteinrichtungen auf, die in die Arretieraussparungen 22 eingreifen und in die Hinterschneidungen 23 einrasten. Die Positionierbolzen 20 dienen bei diesem Vorgang zur genauen Positionierung des Winkelschrittgebers 1 auf der Montagegrundplatte 4. Der Positionierstift 19 dient dem gleichen Zweck und wird in einer entsprechenden Aufnahme (nicht dargestellt) im Winkelschrittgeber 1 aufgenommen. Durch die paßgenaue Aufnahme des Positionierstifts 19 wird zusätzlich noch verhindert, daß die Federarme 10 und 11 sich nach außen bewegen und somit ein weiteres Verstellen der Winkellage ermöglichen. Demnach wird durch das abschließende Aufsetzen und Festrasten des Winkelschrittgebers 1 der gesamte Aufbau in seiner Lage eindeutig fixiert und kann nicht mehr verstellt werden.

Die beschriebene Ausführungsform zeichnet sich dadurch aus, daß keine zusätzlichen Verbindungselemente benötigt werden und lediglich ein einfaches, reihenweises Aufeinandersetzen von Bauelementen zur gewünschten Anordnung eines Winkelschrittgebers 1 an einem Motorgehäuse 2 führt. Diese Tatsache macht sich insbesondere bei den Montagekosten positiv bemerkbar.

## Patentansprüche

1. Elektromotor mit angebrachtem Zusatzelement, insbesondere Winkelschrittgeber, und einer Montagegrundplatte (4), auf der das Zusatzelement (1) aufsitzt und die mit einem Motorgehäuse (2) in ihrer Winkellage bei der Montage einjustierbar verbunden ist, **dadurch gekennzeichnet**, daß am Motorgehäuse (2) eine Profilverzahnung (26) und an der Montagegrundplatte (4) eine Gegenprofilverzahnung (8, 9) vorgesehen sind, die im wesentlichen paßgenau ineinandergreifen und ein Anbringen der Montagegrundplatte (4) in verschiedenen Winkellagen in von der Zahnteilung vorgegebenen Winkelschritten ermöglicht.

2. Elektromotor nach Anspruch 1, **dadurch gekennzeichnet**, daß die Montagegrundplatte (4) über Rasteinrichtungen (31) an dem Motorgehäuse (2) verbunden ist.

3. Elektromotor nach Anspruch 1 oder 2, **dadurch gekennzeichnet**, daß die Profilverzahnung (26) des Motorgehäuses (2) an einer Zwischenplatte (5) angeordnet ist, die mit dem Motorgehäuse (2) verbunden und diesem zugeordnet ist.

4. Elektromotor nach einem der Ansprüche 1 bis 3, **dadurch gekennzeichnet**, daß an der Zwischenplatte (5) Rastelemente (30) angebracht sind, die in entsprechende Rastöffnungen am Motorgehäuse (2) rastend eingesteckt sind.

5. Elektromotor nach einem der Ansprüche 2 bis 4, **dadurch gekennzeichnet**, daß die Profilverzahnung (8, 9) und/oder Gegenprofilverzahnung (26) quer zur Fügerichtung der Verzahnungen (8, 9; 26) gegenüber der jeweils anderen Verzahnung (8,9; 26) zurückfedernd angeordnet ist.

6. Elektromotor nach einem der Ansprüche 3 bis 5, **dadurch gekennzeichnet**, daß an der Zwischenplatte (5) ein Vorsprung (25) mit einer Außenverzahnung (26) als Profilverzahnung und an der Montagegrundplatte (4) eine Aufnahmeöffnung (7) mit entsprechender Innenverzahnung (8, 9) als Gegenprofilverzahnung vorgesehen sind.

7. Elektromotor nach Anspruch 6, **dadurch gekennzeichnet**, daß die Außenverzahnung (26) und/oder Innenverzahnung (8, 9) jeweils nur bereichsweise bzw. segmentweise umlaufend an entsprechend dem Vorsprung (25) und/oder der Aufnahmeöffnung (7) angeordnet sind.

8. Elektromotor nach Anspruch 6 oder 7, **dadurch gekennzeichnet**, daß als Rasteinrichtungen zum Verbinden der Montagegrundplatte (4) an der Zwischenplatte (5) radial über das Zahnprofil der Außenverzahnung (26) überstehende Rastnasen (27) am Vorsprung (25) angeordnet sind, die an entsprechenden Bereichen (21) an der Montagegrundplatte (4) einrasten.

9. Elektromotor nach einem der Ansprüche 6 bis 8, **dadurch gekennzeichnet**, daß in der Montagegrundplatte (4) ein von einer Außenkante (14) bis zur Aufnahmeöffnung (7) verlaufender Trennschlitz (13) vorgesehen ist, der die Montagegrundplatte (4) derart unterteilt, daß zumindest ein Bereich der Aufnahmeöffnung (7) von zwei auf ihrer Innenseite jeweils mit zumindestens einem Bereich (8, 9) der Innenverzahnung versehenen Federarmen (10, 11) umgrenzt ist.

10. Elektromotor nach Anspruch 9, **dadurch gekennzeichnet**, daß in dem dem Trennschlitz (13) gegenüberliegenden Seitenbereich der Aufnahmeöffnung (7) mindestens ein einem Federarm (10, 11) zugeordneter Federschlitz (15, 16) angeordnet ist, der im Abstand zur Außenkante (14) der Montagegrundplatte (4) endet, so daß der Federarm (10, 11) über einen Steg (17, 18) mit dem Rest (12) der Montagegrundplatte (4) verbunden ist.

11. Elektromotor nach Anspruch 9 oder 10, **dadurch gekennzeichnet**, daß jeder Federarm (10, 11) eine Positioniereinrichtung (19, 20) aufweist, die mit einer entsprechenden Positioniereinrichtung des Zusatzelementes (1) im Eingriff steht und ein Bewegen der Federarme (10, 11) verhindert.

12. Elektromotor nach Anspruch 11, **dadurch gekennzeichnet**, daß die Positioniereinrichtung an der Montagegrundplatte (4) als ein durch den Trennschlitz (13) geteilter Positionierstift (19) ausgebildet ist, der in eine als Positionieröffnung ausgebildete Positioniereinrichtung in dem Zusatzelement (1) eingreift.

13. Elektromotor nach einem der Ansprüche 1 bis 12, **dadurch gekennzeichnet**, daß die Montagegrundplatte (4) und/oder das Zusatzelement (1) Rasteinrichtungen zum Miteinanderverrasten aufweist.

14. Elektromotor nach einem der Ansprüche 1 bis 13, **dadurch gekennzeichnet**, daß die Profilverzahnung (8, 9) und Gegenprofilverzahnung (26) auf einer Zylindermantelfläche angeordnet sind.

15. Montagevorrichtung für einen Elektromotor nach einem der Ansprüche 1 bis 14 zum Anbringen eines Zusatzelementes (1), **gekennzeichnet durch** eine Montagegrundplatte (4) mit Gegenprofilverzahnung (26).

16. Montagevorrichtung nach Anspruch 15, **gekennzeichnet durch** eine an dem Motorgehäuse (2) anbringbare Zwischenplatte (5) mit einer zur Gegenprofilverzahnung (26) der Montagegrundplatte (4) passenden Profilverzahnung (8, 9).
